# EUROPÄISCHE PATENTSCHRIFT

(11) **EP 2 385 596 B1**
(45) Veröffentlichungstag und Bekanntmachung des Hinweises auf die Patenterteilung: **20.11.2019**
(21) Anmeldenummer: 11003312.3
(22) Anmeldetag: 20.04.2011
(51) Int. Cl.: H02G 3/08, B60L 53/14, B60L 53/30, B60L 53/31, H02B 1/50, H02G 3/04

(54) **Vorrichtung mit einem Rohr und mit einem daran montierbaren Gehäuse für eine Stromladebox für Elektrofahrzeuge**
Device comprising a tube and a housing mountable to the tube for an electricity charging box for electric vehicles
Dispositif comprenant un tube et un boîtier pouvant être monté sur le tube pour un boîtier de charge électrique pour véhicules électriques

(30) Priorität: 03.05.2010 DE 102010019143
(43) Veröffentlichungstag der Anmeldung: 09.11.2011
(73) Patentinhaber: chargeIT mobility GmbH, 97318 Kitzingen (DE)
(72) Erfinder: Beck, Bernhard, 97332 Volkach (DE); Bachmann, Sebastian, 90453 Nürnberg (DE); Xiong, Ge, 34121 Kassel (DE)
(74) Vertreter: FDST Patentanwälte

(56) Entgegenhaltungen:
- EP-A1- 2 028 580
- EP-A2- 1 335 462
- DE-U- 6 934 971
- DE-U1- 8 424 199
- US-A- 3 753 047

## Beschreibung

Die Erfindung bezieht sich auf eine Vorrichtung mit einem Rohr und mit einem daran montierbaren Gehäuse mit drei Seitenwänden, einem Boden und einem Deckel, wobei in einer ersten Seitenwand eine Öffnung zur Einführung eines Rohres gebildet ist.

Gehäuse und deren Ausführungen sind tausendfach bekannt, wobei je nach Anwendungsfall entweder das Design, bei Massenprodukten insbesondere die Kosten und die Funktionalität, wie z.B. die Zugänglichkeit zum Innenraum, die Austauschbarkeit usw. eine Rolle spielen.

Aus der EP 2 028 580 A1 ist ein Bedienpult für eine Werkzeugmaschine mit einem verschwenkbar an einem Tragarm montierten Gehäuse bekannt. Das Gehäuse weist eine obere und eine untere Gehäuseschale auf, welche gegeneinander verschwenkbar und arretierbar ausgebildet sind. Aus den Dokumenten EP1335462A2, DE8424199U1, US3753047 und DE6934971U sind weitere Anordnungen mit einem Rohr und daran montierbarem Gehäuse bekannt.

Da bei einer Lade-Box für Elektrofahrzeuge mehr oder weniger alle dieser Aspekte zu berücksichtigen sind, hat es sich die Erfindung zur Aufgabe gestellt, eine Vorrichtung mit einem Gehäuse mit ansprechendem Design anzugeben, welches leicht gegen ein anderes baugleiches Gehäuse ausgetauscht werden kann und trotzdem mit wenigen Teilen eine kostengünstige Fertigung erlaubt.

Diese Aufgabe wird erfindungsgemäß durch den Gegenstand des Anspruchs 1 gelöst.

Diese Vorgehensweise bietet den Vorteil, dass das Gehäuse nach Lösen der Verriegelung einfach aus der Führung mit dem Rohrstück zusammen abgezogen werden kann und zur freien weiteren Verwendung, wie z.B. Wartung, Reparatur oder Austausch zur Verfügung steht. An der der ersten Seitenwand gegenüberliegenden Seitenwand ist, mit der Öffnung fluchtend, ein erstes Teil eines elektrischen Steckverbinders befestigt ist und das Rohr weist an seinem freien Ende das Gegenstück zum ersten Teil des Steckverbinders auf und besitzt eine ausreichende Länge, um, wenn durch die Öffnung eingeführt, die Steckverbindung zwischen den beiden Teilen des Steckverbinders herzustellen. Durch diese Maßnahme wird gleichzeitig mit dem Abziehen des Gehäuses vom Rohr die Streckverbindung gelöst. Es ist aber auch möglich, einen klassischen Steckverbinder mit Stecker und Buchse einzusetzen, an die jeweils eine elektrische Zuleitung verdrahtet ist. Dieser wird dann lose in das Rohr eingeschoben und behindert bei entsprechender Länge der Zuleitungen nicht eine ungehinderte Entfernung des Gehäuses vom Rohr.

Die Gehäusehaut wird weiter vereinfacht, wenn die vierte Seitenwand durch einen gebogenen Teil des äußeren Gehäuses oder durch einen Teil der Mantelfläche des Rohres gebildet wird. Die Gehäusehaut besteht dann aus zwei Teilen: i) das U-Teil mit den drei Seitenflächen und ii) des äußeren Gehäuses mit der integrierten vierten Seitenfläche. Das äußere Gehäuse wird vorzugsweise aus einem Polycarbonat gefertigt und das U-Teil aus einem rostgeschützten oder nichtrostendem Material. Die drei das U bildende Seitenwände können ein einstückiges Blechteil sein, welches an seinen Ecken oder Kanten abgerundet ist. Neben den Rundungen ergibt sich ein markantes Design, wenn sich die Öffnung im oberen Drittel oder Viertel der ersten Seitenwand befindet. Dann stellt sich ein Pult - artiges Auftreten der Elektrozapfstelle ein, welches für einen hohen Wiedererkennungswert sorgt.

Die Verwendung des Gehäuses als Elektro-Lade-Box wird weiter vereinfacht, wenn das Rohr im wesentlichen rechtwinklig abgewinkelt ist, so dass zwei ungleich lange Rohrabschnitte gebildet werden, von denen der kurze Rohrabschnitt durch die Öffnung geführt ist und der lange Rohrabschnitt mit seinem Ende am Erdboden befestigt ist. Der lange Rohrabschnitt ist dann ca. 150 cm lang und der kurze Rohrabschnitt ca. 45 cm. Um eine fixierte Neigung des Gehäusedeckels zur Erdoberfläche zu erreichen, weist der kurze Rohrabschnitt an seiner Mantelfläche eine parallel zur Zentrumsachse des Rohres verlaufende, längliche Ausbuchtung auf, die formschlüssig an eine Aussparung am Rand der Öffnung angepasst ist. So ist ein Verdrehen ausgeschlossen, da über die

Kombination von Aussparung mit der Ausbuchtung eine Art Haken bereitgestellt wird, der ein Drehmoment abfängt.

Dieser Haken kann zu einer Führungsschiene erweitert werden, wenn die Aussparung den Nutanfang einer Nut darstellt, die mittels eines an die Aussparung angrenzenden Profilstreifens gebildet wird, der bis zur gegenüberliegenden Seitenwand verläuft und dort mit dieser verbunden ist.

Die beabsichtigte Funktion des Gehäuses erfordert es, dass an zumindest einer Seitenwand zumindest ein erstes Teil eines weiteren Steckverbinders angebracht ist. Das Gehäuse ist vorzugsweise an den Seitenflächen (wobei prinzipiell aber auch der Boden oder der Deckel infrage kommen) mit den Buchsen oder den Steckern von zwei weiteren Steckverbindern oder vier weiteren Steckverbindern bestückt. Die weiteren Steckverbinder 25 bestehen zunächst aus Teilen herkömmlicher 230 Volt Steckverbindungen oder Kraftstromsteckdosen bzw. -stecker und sind hinter weiteren Aussparungen am Gehäuse frei von außen zugänglich angebracht.

Weitere Ausgestaltungen und Vorteile der Erfindung ergeben sich aus der Beschreibung eines Ausführungsbeispiels anhand der Figuren. Es zeigen:
- Fig. 1: eine Ansicht der Montage eines erfindungsgemäßen Gehäuses;
- Fig. 2: ein Gehäuse als alternative Wandmontage
- Fig. 3: eine Detailansicht zur Führungsschiene; und
- Fig. 4: eine Detailansicht zur Verriegelung.

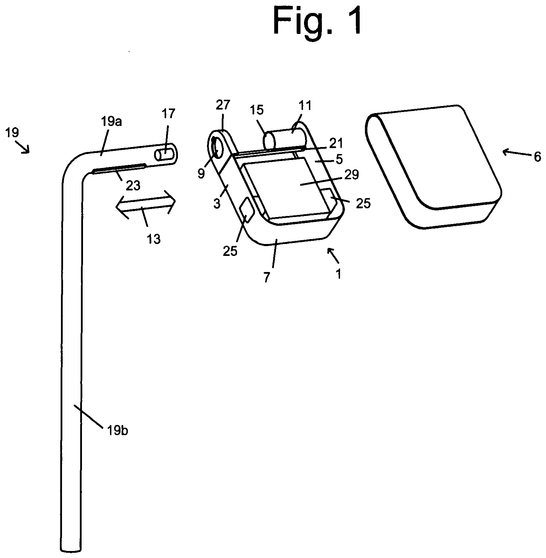

In der Figur 1 ist mit 1 ein U-förmiges erstes Gehäuseteil gezeigt, welches zwei Schenkelseiten 3,5 und eine Grundseite 7 aufweist. In einer seiner Schenkelseiten 3 ist eine kreisförmige Öffnung 9 vorgesehen. Der Durchmesser der Öffnung 9 an den Außendurchmesser eines Rohres 19 angepasst, so dass das Rohr 19 von außen in den Innenbereich des U eingeführt werden kann.

Das Rohr 19 ist an seinem Ende mit einer Anschlussbuchse 17 versehen, diese ist so ausgeführt dass sie das Gegenstück zum Stecker 15 im Rohr 11 bildet. Das Rohr 11 befindet sich an der Schenkelseite 5. Um die Richtige Lage und Orientierung der Anschlussbuchse 17 und des Steckers 15 zu gewährleisten, ist im Gehäuse 1 eine Nutschiene 21 und auf dem Rohr 19 eine Führungsschiene 23 vorgesehen. Das Gehäuse 1 kann somit entlang des Pfeils 13 Montiert und demontiert werden.

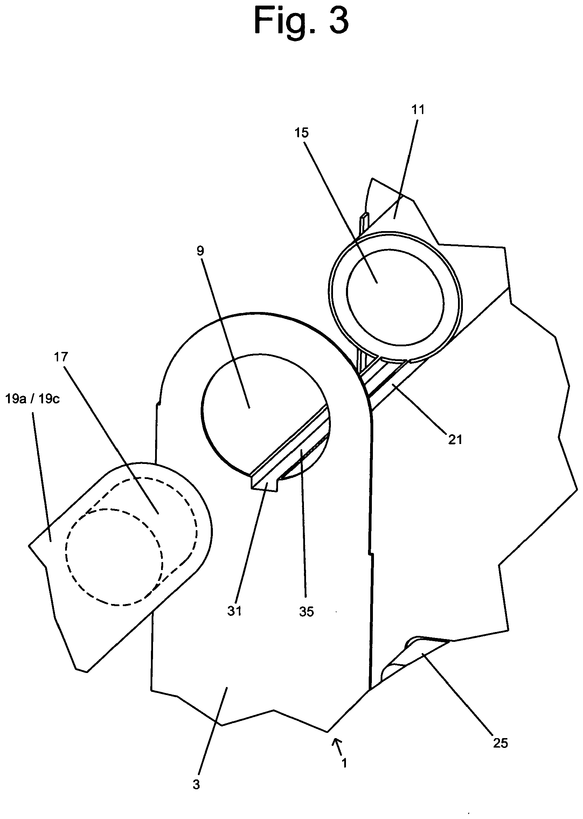

Am kurzen Rohrabschnitt 19a ist noch eine Auswölbung in Form einer Schiene 23 gezeigt, die sich in Richtung der Längsachse des Rohrabschnitts 11 erstreckt. Die Abmessungen, d.h. die Breite und die Höhe der Schiene 21 sind an die Abmessungen einer Aussparung 31 (nicht gezeigt) angepasst, die sich von der Peripherie der Öffnung 9 ausgehend in die Seitenwand 3 hinein erstreckt. Die Aussparung 31 (nicht gezeigt) bewirkt zusammen mit der Schiene 21 eine Verdrehsicherung zwischen dem Rohrstück 11 und dem U-förmigen Teil 1. An die Aussparung 31 schließt sich eine Profilleiste oder Profilschiene 21 an, die eine Nut oder einen Kanal 35 (nicht gezeigt) bildet in welche die Schiene 23 gleiten kann. Die Profilschiene 21 ist fest mit den beiden Schenkeln 3,5 des U-Teils 1 verbunden und dienen so gleichzeitig als eine Verstärkung. Die Profilschiene 21, das Rohrstück 11 und die Aussparung 31 sind nochmals in vergrößerter Darstellung in der Figur 3 gezeigt.

Weiterhin ist im Gehäuse 1 eine Komponentenbox 29 vorgesehen, damit die elektrischen Bauteile vor Witterungseinflüssen geschützt sind. Die Anschlussstecker 25 sind mit dieser Box verbunden und an einer der Schenkelseiten 3,5 oder Deckel 6 befestigt.

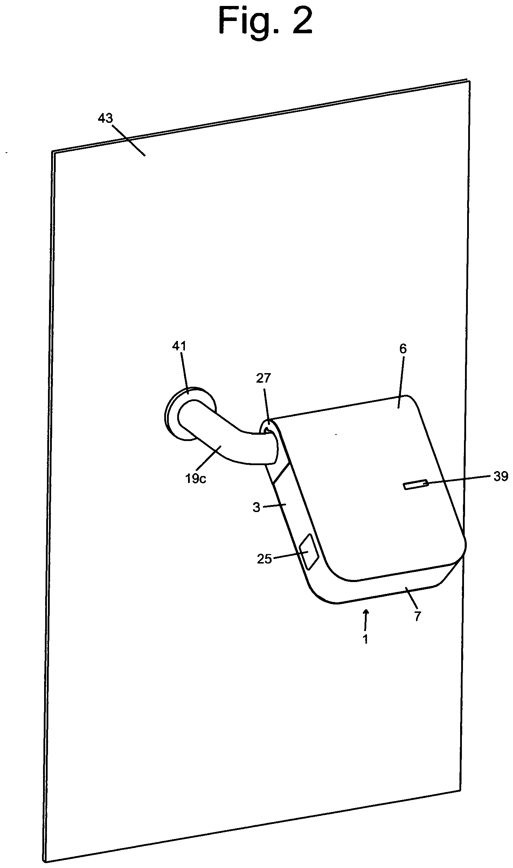

Aus der Figur 2 ist eine alternative Wandmontagetechnik gezeigt. Sie zeigt ein Rohrstück 19c, welches mittels einer Montageplatte 41 an der Wand 43 befestigt ist. Weiterhin ist in der Figur 2 der Deckel 6 mit integriertem Monitor 39 dargestellt.

In der Figur 3 ist eine Detailansicht der Nutschiene 21 zu sehen. Hier ist deutlich die Aussparung 31 zu sehen, welche in eine Nut oder einen Kanal 35 der Schiene 21 übergeht um ein gleiten der Führungsschiene 23 (nicht gezeigt) zu gewährleisten.

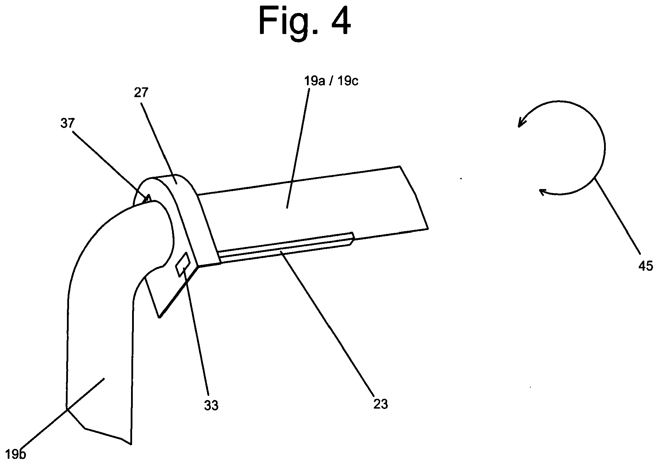

Die Figur 4 zeigt eine Detailansicht zur Verriegelung des Gehäuses 1 (Gehäuse in der Figur weggelassen). Das Sicherungsstück 27 wird mit der Nut 37 nach unter über das Rohr 19a, 19c und die Führungsschiene 23 geschoben. Nachdem das Sicherungsstück 27 die Führungsschiene passiert hat. Wir es um 180 Grad entlang des Pfeils 45 gedreht. Nun kann das Gehäuse 1 (nicht gezeigt) über das Rohr geschoben werden und mit dem Schloss 33 gesichert werden.

### Bezugszeichenliste

- 1: U-Teil
- 3: erster Schenkel, Seitenwand
- 5: zweiter Schenkel, Seitenwand
- 6: Gehäuse-Deckel
- 7: Grundseitenwand
- 9: Öffnung
- 11: Rohrstück
- 13: Richtungspfeil
- 15: Anschlussstecker
- 17: Anschlussbuchse
- 19: Rohr
- 21: Nutschiene
- 23: Führungsschiene
- 25: Stecker
- 27: Sicherungsstück
- 29: Komponenten Box
- 31: Aussparung
- 33: Schloss
- 35: Nut, Kanal
- 37: Nut, Sicherung
- 39: Display
- 41: Wandanschlussplatte
- 43: Wand
- 45: Drehpfeil

## Patentansprüche

1. Vorrichtung mit einem Rohr (19) und mit einem daran montierbaren Gehäuse für eine Stromladebox für Elektrofahrzeuge mit drei Seitenwänden (3,5,7) und einem Deckel (6), wobei in einer ersten Seitenwand (3) eine Öffnung (9) zur Einführung des Rohres (19) gebildet ist,
wobei die drei Seitenwände (3,5,7) zu einem U angeordnet sind, an dessen den ersten Schenkel bildende Seitenwand (3) die Öffnung (9) vorgesehen ist, an dessen die gegenüberliegende Seitenwand (5) bildenden zweiten Schenkel mit der Öffnung (9) fluchtend ein Rohrstück (11), dessen Querschnitt, insbesondere Durchmesser, größer oder kleiner ist als der Querschnitt des Rohres (19), mit der Seitenwand (5) verbunden ist, wobei das Rohr (19) einen durch die Öffnung (9) eingeführten Rohrabschnitt (19a) aufweist, und wobei der Rohrabschnitt (19a) und das Rohrstück (11) ineinander schiebbar und im zusammen geschobenen Zustand verriegelbar sind, **dadurch gekennzeichnet,**
- **dass** an der der ersten Seitenwand (3) gegenüberliegenden Seitenwand (5), mit der Öffnung (9) fluchtend, im Rohrstück (11), ein erstes Teil (15) eines elektrischen Steckverbinders befestigt ist und dass der Rohrabschnitt (19a) an seinem freien Ende das Gegenstück (17) zum ersten Teil des Steckverbinders aufweist und eine ausreichende Länge besitzt, um, wenn durch die Öffnung (9) eingeführt, die Steckverbindung zwischen den beiden Teilen (17, 15) des Steckverbinders herzustellen.

2. Vorrichtung nach Anspruch 1, **dadurch gekennzeichnet, dass** die dritte Seitenwand (3) durch einen gebogenen Teil des Deckels (6) oder durch einen Teil der Mantelfläche des Rohrabschnitts (19a) gebildet wird.

3. Vorrichtung nach Anspruch 1 oder 2, **dadurch gekennzeichnet, dass** der Rohrabschnitt (19a) rund ist und am zylindrischen Mantel eine parallel zur Zentrumsachse des Rohrabschnitts (19a) verlaufende, längliche Ausbuchtung (23) aufweist, die formschlüssig an eine Aussparung am Rand der Öffnung (9) angepasst ist.

4. Vorrichtung nach Anspruch 3, **dadurch gekennzeichnet, dass** die Aussparung (31) den Nutanfang einer Nut (35) darstellt, die mittels einer an die Aussparung (31) angrenzenden Profilschiene (21) gebildet wird, die bis zur gegenüberliegenden Seitenwand (5) verläuft und dort mit dieser verbunden ist.

5. Vorrichtung nach einem der Ansprüche 1 bis 4, **dadurch gekennzeichnet, dass** zumindest drei Seitenwände (3, 5, 7) ein einstückiges Blechteil bilden, welches an seinen Ecken und/oder Kanten abgerundet ist.

6. Vorrichtung nach einem der Ansprüche 1 bis 5, **dadurch gekennzeichnet, dass** an zumindest einer weiteren Seitenwand zumindest ein erstes Teil (15) eines weiteren Steckverbinders angebracht ist.

7. Vorrichtung nach einem der Ansprüche 1 bis 6, **dadurch gekennzeichnet, dass** sich die Öffnung (9) im oberen Drittel der ersten Seitenwand (3) befindet.

8. Vorrichtung nach einem der Ansprüche 1 bis 7, **dadurch gekennzeichnet, dass** das Rohr (19) rechtwinklig abgewinkelt ist, so dass zwei ungleich lange Rohrabschnitte (19a,19b) gebildet werden, von denen der kurze Rohrabschnitt (19a) durch die Öffnung (9) geführt ist und der lange Rohrabschnitt (19b) mit seinem Ende am Erdboden befestigt ist.

9. Vorrichtung nach einem der Ansprüche 1 bis 8, **dadurch gekennzeichnet, dass** das Gehäuse zumindest folgende Teile beherbergt:
- mindestens eine weitere Buchse (25), Sockel oder Stecker
- ein am Deckel befestigtes Display (39)
- ein inneres Gehäuse (29) zum Schutz der elektrischen Bauteile

## Claims

1. Apparatus having a tube (19) and having a housing, which can be mounted thereon, for a charging box for electric vehicles, having three side walls (3, 5, 7) and a cover (6), wherein a first side wall (3) contains an opening (9) for the introduction of the tube (19), wherein the three side walls (3, 5, 7) are arranged to form a U, which has the opening (9) provided on its side wall (3), which forms the first limb, and on its second limb, which forms the opposite side wall (5), in alignment with the opening (9), a tube piece (11) is connected to the side wall (5), the cross section, in particular the diameter, of said tube piece being larger or smaller than the cross section of the tube (19), wherein the tube (19) has a tube portion (19a), which is introduced through the opening (9), and wherein the tube portion (19a) and the tube piece (11) can be pushed one inside the other and, in the pushed-together state, can be locked, **characterized**
- **in that** on the side wall (5), which is located opposite the first side wall (3), in alignment with the opening (9), a first part (15) of an electric plug connector is fastened in the tube piece (11), and in that, at its free end, the tube portion (19a) has the part which forms the counterpart (17) to the first part of the plug connector and is long enough so that, when introduced through the opening (9), it establishes the plug-in connection between the two parts (17, 15) of the plug connector.

2. Apparatus according to Claim 1, **characterized in that** the third side wall (3) is formed by a bent part of the cover (6) or by part of the lateral surface of the tube portion (19a).

3. Apparatus according to Claim 1 or 2, **characterized in that** the tube portion (19a) is round and, on the cylindrical lateral surface, has an elongate convexity (23), which runs parallel to the central axis of the tube portion (19a) and is adapted in a form-fitting manner to a cutout on the periphery of the opening (9).

4. Apparatus according to Claim 3, **characterized in that** the cutout (31) constitutes the start of a groove (35) which is formed by means of a profile rail (21) which is adjacent to the cutout (31), runs to the opposite side wall (5) and is connected to said side wall there.

5. Apparatus according to one of Claims 1 to 4, **characterized in that** at least three side walls (3, 5, 7) form a single-piece sheet-metal part which is rounded at its corners and/or along its edges.

6. Apparatus according to one of Claims 1 to 5, **characterized in that** at least one first part (15) of a further plug connector is fitted on at least one further side wall.

7. Apparatus according to one of Claims 1 to 6, **characterized in that** the opening (9) is located in the upper third of the first side wall (3).

8. Apparatus according to one of Claims 1 to 7, **characterized in that** the tube (19) is angled at right angles, and this forms two portions (19a, 19b) of unequal lengths, the short tube portion (19a) being guided through the opening (9) and the long tube portion (19b) having its end fastened on the ground.

9. Apparatus according to one of Claims 1 to 8, **characterized in that** the housing contains at least the following parts:
- at least one further socket (25) or plug
- a display (39), which is fastened on the cover
- an inner housing (29) for protecting the electrical components.

## Revendications

1. Dispositif comprenant un tube (19) et un boîtier qui est monté sur celui-ci, qui est destiné à une boîte de charge de courant pour véhicules électriques, et qui comporte trois parois latérales (3, 5, 7) et un couvercle (6), une ouverture (9) destinée à l'introduction du tube (19) étant ménagée dans une première paroi latérale (3),
les trois parois latérales (3, 5, 7) étant disposées en U, l'ouverture (9) étant ménagée au niveau de la paroi latérale (3) formant la première branche,
une pièce tubulaire (11) qui est alignée avec l'ouverture (9) et dont la section transversale, notamment le diamètre, est supérieure ou inférieure à la section transversale du tube (19), étant située au niveau de la deuxième branche du U formant la paroi latérale opposée (5) et étant reliée à la paroi latérale (5),
le tube (19) comportant une portion de tube (19a) qui est introduite dans l'ouverture (9), et
la portion de tube (19a) et la pièce tubulaire (11) pouvant coulisser l'une dans l'autre et pouvant être verrouillées à l'état rapproché,
**caractérisé en ce que**
- une première partie (15) d'un connecteur électrique enfichable est fixée dans la pièce tubulaire (11), à la paroi latérale (5) opposée à la première paroi latérale (3), en étant alignée avec l'ouverture (9), et
- la partie de tube (19a) possède à son extrémité libre la pièce homologue (17) destinée à la première partie du connecteur enfichable et a une longueur suffisante pour établir, lorsqu'elle est insérée dans l'ouverture (9), la connexion enfichable entre les deux parties (17, 15) du connecteur enfichable.

2. Dispositif selon la revendication 1, **caractérisé en ce que** la troisième paroi latérale (3) est formée par une partie incurvée du couvercle (6) ou par une partie de la surface latérale de la partie de tube (19a).

3. Dispositif selon la revendication 1 ou 2, **caractérisé en ce que** la partie de tube (19a) est ronde et comporte sur l'enveloppe cylindrique un renflement allongé (23) qui s'étend parallèlement à l'axe central de la partie de tube (19a) et qui est adapté par complémentarité de formes à un évidement ménagé au niveau du bord de l'ouverture (9).

4. Dispositif selon la revendication 3, **caractérisé en ce que** l'évidement (31) représente l'amorce d'une rainure (35) qui est formée au moyen d'un rail profilé (21) adjacent à l'évidement (31) et s'étendant jusqu'à la paroi latérale opposée (5) à laquelle il est relié.

5. Dispositif selon l'une des revendications 1 à 4, **caractérisé en ce qu'**au moins trois parois latérales (3, 5, 7) forment un élément en tôle d'une seule pièce qui est arrondie au niveau de ses angles et/ou de ses bords.

6. Dispositif selon l'une des revendications 1 à 5, **caractérisé en ce qu'**au moins un premier élément (15) d'un autre connecteur est monté sur au moins une autre paroi latérale.

7. Dispositif selon l'une des revendications 1 à 6, **caractérisé en ce que** l'ouverture (9) est ménagée dans le tiers supérieur de la première paroi latérale (3).

8. Dispositif selon l'une des revendications 1 à 7, **caractérisé en ce que** le tube (19) est coudé à angle droit de façon à former deux parties de tube (19a, 19b) de longueur inégale, dont la partie de tube courte (19a) est guidée à travers l'ouverture (9) et la partie de tube longue (19b) est fixée au sol par son extrémité.

9. Dispositif selon l'une des revendications 1 à 8, **caractérisé en ce que** le boîtier contient au moins les pièces suivantes :
- au moins une autre prise femelle (25), une embase ou une prise mâle,
- un moyen d'affichage fixé au couvercle (39),
- un boîtier intérieur (29) destiné à protéger les composants électriques.
